# EUROPÄISCHE PATENTSCHRIFT

(11) **EP 0 548 139 B1**
(45) Veröffentlichungstag und Bekanntmachung des Hinweises auf die Patenterteilung: **11.01.1995**
(21) Anmeldenummer: 91915948.3
(22) Anmeldetag: 11.09.1991
(51) Int. Cl.: F16J 15/32, F28F 9/00

(54) **EINRICHTUNG ZUR ABDICHTUNG EINES SPALTES ZWISCHEN BAUTEILEN ODER -GRUPPEN**
DEVICE FOR SEALING A GAP BETWEEN STRUCTURAL COMPONENTS OR GROUPS
DISPOSITIF POUR L'ETANCHEIFICATION D'UNE FENTE ENTRE COMPOSANTS OU SOUS-GROUPES

(30) Priorität: 13.09.1990 DE 4029010
(43) Veröffentlichungstag der Anmeldung: 30.06.1993
(73) Patentinhaber: MTU MOTOREN- UND TURBINEN-UNION MÜNCHEN GMBH, D-80976 München (DE)
(72) Erfinder: MAIER, Karl, D-8047 Karlsfeld (DE)
(86) Internationale Anmeldenummer: EP9101725
(87) Internationale Veröffentlichungsnummer: WO9205377

(56) Entgegenhaltungen:
- EP-A- 0 143 665
- EP-A- 0 199 320
- EP-A- 0 199 322
- DE-A- 3 514 377

## Beschreibung

Die Erfindung bezieht sich auf eine Einrichtung nach dem Oberbegriff des Patentanspruchs 1.

Beispielsweise bei Brennkraftmaschinen, Gasturbinen, Strahltriebwerken oder Wärmetauschern bereitet es Schwierigkeiten, von einem heißen Fluid, z.B. Heißgas, durchströmte Spalte auf vergleichsweise einfache Weise und zuverlässig abzudichten; dies insbesondere deshalb, weil die einander benachbarten Bauteile, die den Spalt ausbilden, unterschiedlichen thermisch bedingten Dehnungen sowie räumlich unterschiedlichen Bewegungen ausgesetzt sind, die u.a. aus Stoßbelastungen resultieren können.

Mit Lösungen für das in Rede stehende Problem befaßt sich die DE-A-35 14 377 bei einem Wärmetauscher in Kreuz-Gegenstrom-Bauweise, der im wesentlichen parallele Sammelrohre für Druckluftzufuhr in eine bzw. -abfuhr aus einer Rohrmatrix aufweist, die aus U-förmigen Profilrohren besteht und ferner ein die Matrix umgebendes Gehäuse für die Heißgasdruchströmung der Matrix aufweist. Bei einer ersten Version soll im bekannten Fall gegenüber zugeführtem Heißgas ein Spalt zwischen einander benachbarten Bauteilen (Leitwand der Rohrmatrix/Gehäuse) durch eine bewegungskompensatorische Differenzdruck-Dichtung überbrückbar sein; dabei soll ein am Gehäuse (erstes Bauteil) befestigter dünner Blechstreifen oder eine Folie vorgesehen sein, der bzw. die mit Axial- und Radialspiel in eine mit der Leitwand (zweites Bauteil,z.B. "Schale") verbundene Fuge eingreifen soll, die von einem gabelförmigen Träger ausgebildet ist. Ausschließlich als Funktion herrschenden Differenzdruckes soll sich z.B. der dünne Streifen an eine innere Fugenflanke abdichtend anschmiegen; wesentlicher Nachteil dieser Lösung ist es, daß die Abdichtwirkung in Fällen, bei denen praktisch keine oder vergleichsweise niedrige Druckdifferenzen vorliegen, versagt. Ein weiterer Nachteil dieser ersten Dichtungsversion des bekannten Falles wird in der einseitig bauteil-bezogenen, starren Anbindung und Ausbildung des streifenförmigen Dichtelements gesehen; es ist also das Dichtelement für sich nicht thermisch bzw. bewegungskompatibel ausgebildet. Der räumliche bewegungskompensatorische Freiheitsgrad dieses Dichtkonzepts ist also vergleichsweise stark eingeschränkt. Bei einer zweiten Abdichtungs-Version des bekannten Falles soll anstelle der Differenzdruckdichtung (Streifen, Folie)eine Bürstendichtung im betreffenden Spalt angeordnet sein, bei der die einen -freien Enden der Borsten in die Fuge, unter örtlicher Borstenzusammendrückung, beweglich eingreifen sollen. Vergleichsweise hoher Herstellungsaufwand der Bürstendichtung (Borstenpackung) sowie relativ frühzeitig einsetzender Verschleiß durch Reibung und Temperatureinwirkung sind wesentliche Nachteile dieses bekannten Konzepts, welches für sich im übrigen auch aus der DE-A-35 14 382 bekannt ist.

Der Erfindung liegt die Aufgabe zugrunde, eine Dichtung nach der eingangs genannten Art anzugeben, die unabhängig von herrschenden Differenzdrücken verschleißarm und zuverlässig ist, insbesondere mit Rücksicht auf betriebsbedingte vergleichsweise starke räumliche gegenseitige Bauteilbewegungen und -verschiebungen am abzudichtenden Spalt.

Die gestellte Aufgabe ist mit den Merkmalen des Kennzeichnungsteils des Patentanspruchs 1 erfindungsgemäß gelöst.

Somit gelingt es, eine kostengünstige, zuverlässig arbeitende Abdichtung, insbesondere gegenüber Heißgas, zu schaffen, und zwar auch in allen Fällen, in denen verhältnismäßig große Abweichungen von der gewünschten Spaltgeometrie auftreten; dieses selbst in Relation zu in allen drei Raumrichtungen auftretenden, gegenseitigen verhältnismäßig großen Bauteilverschiebungen gegenüber der Normallage. Dabei kann der Dichtkörper in Spaltlängsrichtung beweglich bzw. individuell in sich beweglich und thermisch dehnungskompatibel ausgebildet sein, was u.a. über die gegenseitigen Abstandspalte, zwischen benachbarten Stoßkanten der Dichtbleche, erreicht wird. Erfindungsgemäß kann der Dichtkörper auch als mehr- oder doppellagig schindelförmig interpretiert werden; zumindest eine schichtweise Doppellagigkeit der Elemente bzw. Bleche gewährleistet eine in Spaltlängsrichtung versetzte gegenseitige und dichte Überbrückung der Abstandspalte.

Die federartige Umklammerung des der einen Bauteilseite zugewandten Endes des Dichtkörpers hat u.a. folgende wesentlichen Vorteile: Einwandfreie Abdichtung, und zwar differenzdruckunabhängig, auch bei verhältnismäßig großem relativen Bauteilversatz, quer zur Breitenerstreckung des abzudichtenden Spaltes. Eine zumindest einseitige "Federzangen-Ausbildung" (Wandabschnitt) der Fuge gewährleistet die abdichtende Aufnahme einer kombinierten Schiebe- und Schwenkbewegung des Dichtungskörpers. Dabei wird die Schwenkbewegung durch die einseitig bauteil-bezogene Haken-Aufhängung gefördert, die wiederum die Verschiebung der Elemente bzw. des Dichtkörpers in Spaltlängsrichtung ermöglicht. Zugleich ist die Fuge in der Lage, das aus Einzelelementen zusammengesetzte "Platten-Gebilde" in Spaltlängsrichtung bewegungskompensatorisch aufzunehmen. Die federartige Umklammerung des Dichtkörpers an der Fuge erbringt einen gegenseitigen Zusammenhalt der einzelnen Elemente oder Bleche, ohne - zunächst auf örtliche gegenseitige Fixierpunkte der Bleche oder Platten angewiesen zu sein.

Vorteilhafte Ausgestaltungen der Erfindung ergeben sich aus den Patentansprüchen 2 bis 13 . Anhand der Zeichnungen ist die Erfindung beispielsweise weiter erläutert, es zeigen:
- Fig. 1: eine Stirnansicht einer gehäuseseitig aufgeschnitten und teilweise abgebrochen dargestellten Profilrohrwärmetauschers in Kreuz-Gegenstrom-Bauweise als bevorzugtes Anwendungsbeispiel für die Einrichtung nach der Erfindung,
- Fig. 2: einen teilweise abgebrochen dargestellten Abschnitt gemäß Schnittlinie II-II der Fig. 2,
- Fig. 3: einen perspektiv-Ausschnitt elliptischer Profilrohre der Matrix in Anstellung zur Heißgasströmungsrichtung,
- Fig. 4: die Einrichtung nach der Erfindung zwischen stirnseitig gesehenen Abschnitten des Bogenbreiches der Matrix und des Gehäuses, hier gegenüber Fig. 1, auf der rechten Seite des Wärmetauschers angeordnet zu verstehen,.
- Fig. 5: eine Ansicht des Dichtungskörpers gemäß Blickrichtung X aus Fig. 4 unter Verdeutlichung der am Gehäuse laschenartig ausgebildeten Aufhängestruktur der Elemente als Bleche oder Platten,
- Fig. 6: eine Stirnansicht des Dichtungskörpers gemäß Blickrichtung Z aus Fig. 5,
- Fig. 7: ein gegenüber Fig. 4 und 5 abgewandelte Ausführungsform der Einrichtung nach der Erfindung, hier in Anordnung zwischen einem Leitwandabschnitt der Matrix und einem Gehäuseabschnitt, in beispielhafter Überbrückung eines Spaltes gemäß D nach Fig. 2, sowie im kalten bzw. Ruhezustand befindlich dargestellt,
- Fig. 8: die Einrichtung der Fig. 7, jedoch hier im heißen Zustand befindlich dargestellt (thermisch bedingter Bauteillageversatz),
- Fig. 9: zu Fig. 7 und 8 gehörenden Dichtungskörper, gemäß Blickrichtung Y aus Fig. 7 gesehen und
- Fig. 10: eine Ansicht des Dichtungskörpers aus Fig. 7 bis 9, gemäß Blickrichtung L der Fig. 9 gesehen.

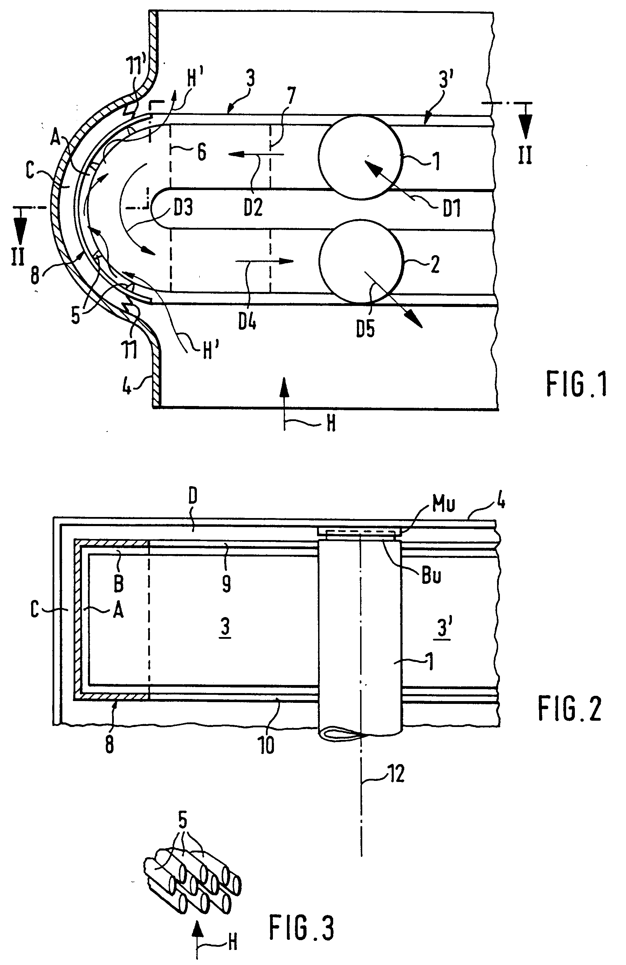

Fig. 1 bis 3 erläutern die beispielhafte und vorteilhafte Anwendungsmöglichkeit der Erfindung an einem Profilrohr-Wärmetauscher in Kreuz-Gegenstrom-Bauweise. Der Wärmetauscher besteht im wesentliche aus zwei parallel nebeneinander angeordneten Sammelrohren 1,2, an die hier jeweils auf einander gegenüberliegenden Seiten eine U-bogenförmige Profilrohrmatrix 3 bzw. 3' angeschlossen ist, die quer in eine vom Gehäuse 4 geführte Heißgasströmung H hineinragt. Die betreffende Matrix 3 bzw. 3' besteht aus U-förmig gebogenen Profilrohren von denen einige, gemäß Fig. 3, bezüglich eines geradschenkeligen Abschnitts des U, mit 5 bezeichnet sind. Die Profilrohre 5 weisen z.B. einen elliptischen Querschnitt auf und werden dabei etwa in Richtung der jeweils großen Ellipsenachse vom Heißgas H umströmt. In den gestrichelt markierten Regionen der betreffenden Matrix, z.B. 3, können Abstandshalter 6,7 angeordnet sein, um die Profilrohre 5 (Fig.3) gleichförmig gegenseitig beabstandet ineinandergreifen zu lassen. Im Betrieb strömt bei diesem Wärmetauscher aufzuheizende Druckluft gemäß Pfeil D1 in das hier obere Sammelrohr 1 ein und druchströmt dann die Profilrohre 5 der Matrix 3 bzw. 3' gemäß Pfeilfolge D2, D3, D4 unter Einschluß einer Umkehrung der Strömungsrichtung (D3). Die so über das Heißgas H aufgeheitzte Druckluft kann dann aus dem hier unteren Sammelrohr 2 gemäß Pfeil D5 einem geeigneten Verbraucher, z.B. der Brennkammer eines Gasturbinentriebwerks, zugeführt werden.

Wie ferner aus Fig. 1 und 2 hervorgeht, weist die betreffende Matrix, z.B. 3, einen den betreffenden Matrixbogenbereich außen sowie seitlich mit Abständen A (Fig. 1) bzw. B (Fig.2) ummantelenden schalenartigen Abdeckkörper 8 auf. Insbesondere der Abstandsspalt A wird mit bewegungskompensatorischen Bürstendichtungen S an verteilten Stellen überbrückt, damit sich die einzelne U-förmigen Profilrohre 5 bzw. Rohrbügel individuell in den Spalt A hineindehnen können, wobei gleichzeitig ein bogenrandständiger Strömungsverlauf H' des zugeführten Heißgases erzwungen wird, der den Wärmeaustauschgrad im Bogenbereich erhöht zu Gunsten wiederum einer gleichförmigen Heißgasmassenstrom-Verteilung auf die Gesamtmatrix.

Wie insbesondere aus Fig. 2 hervorgeht, weist die betreffende Matrix, z.B. 3, auch sich in Profilrohrlängsrichtung seitlich außen erstreckende Leitwände 9,10 auf, die mit den Sammelrohren 1,2 und gegebenenfalls - wie z.B. dargestellt - mit dem Abdeckkörper 8 verbunden sein können. Gemäß Fig. 1 und 2 sind weitere Abstandsspalte C bzw. D dicht und räumlich bewegungskompensatorisch zu überbrücken. Hierzu kann die erfindungsgemäße Einrichtung zur Abdichtung vorteilhaft eingesetzt werden; und zwar gemäß Fig. 1 an den schematisch symbolisierten Stellen 11,11' - im Spalt C - zwischen gekrümmter Auswölbung des Gehäuses 4 als einem Bauteil oder -abschnitt und dem Abdeckkörper 8 als anderem Bauteil oder -abschnitt; ferner wäre z.B. erfindungsgemäß der Abstandsspalt D (Fig. 2) zwischen dem Gehäuse 4 als einem Bauteil oder -abschnitt und der benachbart angrenzenden Leitwand 9 mit Seitenwandteil des Abdeckkörpers 8 als dem anderen Bauteil oder -abschnitt und der benachbart angrenzenden Leitwand 9 mit Seitenwandteil des Abdeckkörpers 8 als dem anderen Bauteil oder -abschnitt dicht und räumlich bewegungskompensatorisch zu überbrücken; der Spalt C dient u.a. zur Kompensation verhältnismäßig großer, in Profilrohrlängsrichtung erfolgender freier Dehnbarkeit des Abdeckkörpers 8, hier z.B. zusammen mit beiden Leitwänden 9,10, wohingegen das Gehäuse 4 wiederum frei gegenüber dem Abdeckkörper 8 dehnbar verbleibt. Die Leitwände, z.B. 9, sind mit den Sammelrohren 1,2 unmittelbar verbunden; somit ist z.B. die Leitwand 9 einer Lageveränderung unterworfen, die einer thermisch bedingten Längenänderung der Sammelrohre 1,2 in Richtung deren jeweiliger Längsachsen, z.B. 12 (Fig. 2), folgt. Mit Rücksicht auf derartige Rohrlängenänderungen können die Sammelrohre 1,2 axial verschiebbar im Gehäuse 4 gehalten sein; siehe: Z.B. Schiebesitz, Buchse Bu in Muffe Mu am Gehäuse 4. Ferner sind die genannten Spalte C und D u.a. erforderlich, um z.b. aus horizontalen und vertikalen Stoßbelastungen (Fahrbetrieb) resultierende gegenseitige freie Relativbewegungen zwischen Matrix, z.B. 3, und Gehäuse 4 zu ermöglichen. In Ermöglichung der genannten Kriterien müssen genannte Spalte C und D aber gleichzeitig möglichst optimal abgedichtet werden, so daß damit das zugeführte Heißgas im Wärmetauschprozeß voll nutzbar gemacht werden kann und somit nicht über genannte Spalte nutzlos abfließt.

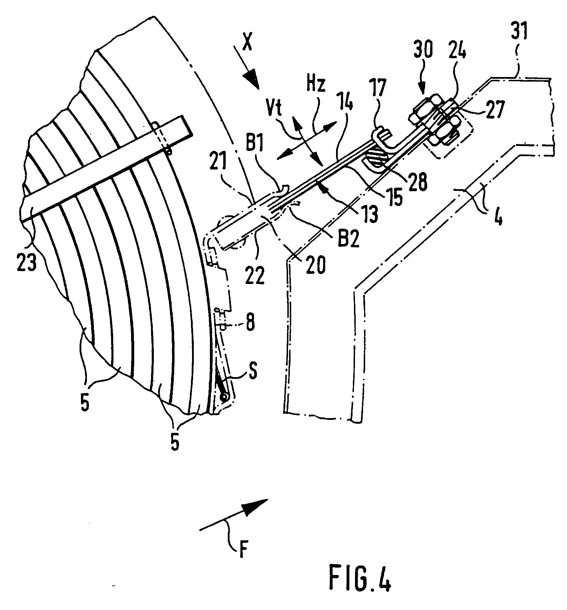

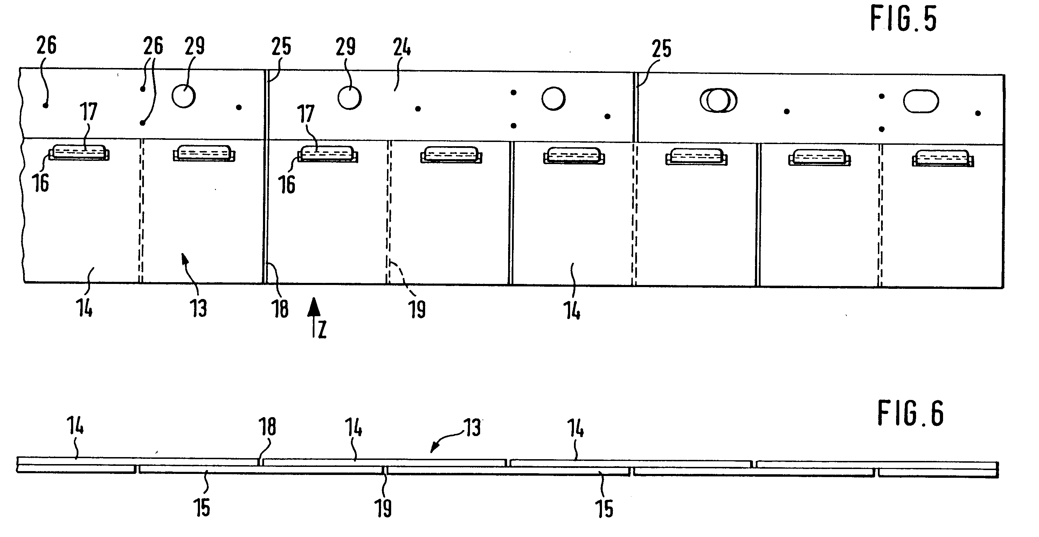

Fig. 4,5 und 6 behandeln die erfindungsgemäße Einrichtung zu Abdichtung eines Abstandspaltes im Sinne von C nach Fig. 1. Wie insbesondere aus Fig. 5 und 6 ersichtlich, ist der betreffende Dichtungskörper 13 aus Elementen 14,15, wie Blechplatten oder dergleichen, hier doppellagig schichtartig zusammengesetzt. Die Elemente 14,15 sind räumlich begrenzt in Spaltlängsrichtung verschiebbar angeordnet; sie sind ferner im Sinne einer Zusammenschiebung oder Streckung relativ zueinander in Spaltlängsrichtung verschiebbar. Dies geschieht hier z.B. zugleich im Wege der einseitig bauteil-bezogenen Aufhängemittel des Dichtungskörpers 13 nebst Elementen 14,15; es weisen also die Elemente 14,15 in einer Ebene, in Spaltrichtungslängsrichtung aufeinander folgend, Längsschlitze 16 (Fig. 5) auf, mit denen der Dichtungskörper 13 nebst Elementen 14,15 lose an Haken 17 schwenkbar (s.h. auch Vt-Fig.4) sowie in Spaltlängsrichtung axial verschiebbar, bzw. in Elementen relativ zueinander verschiebbar angeordnet bzw. aufgehängt ist. Die Haken 17 sind in später noch näher erläuterter Weise am Gehäuse 4 befestigt.

Unter Belassung vorgegebenen Abstandsspalte 18,19 zwischen (Fig. 5,6) in Spaltlängsrichtung aufeinander folgender Stoßkanten der Elemente 14 bzw. 15 sind diese in Spaltlängsrichtung relativ zueinander frei dehnbar angeordnet. Dabei erfolgt eine stets abdichtend überlappende Überbrückung der Abstandsspalte, d.h., Element 14 auf Spalt 19 bzw. Element 15 auf Spalt 18. Erfindungsgemäß könnte die genannte Ausbildung des Dichtungskörpers 13 auch als "schindelförmig" umschrieben werden. Das von der Aufhängungsseite (Haken 17) abgewandte Ende des Dichtungskörpers 13 ist mit den betreffenden Elementen 14,15 in einer am anderen Bauteil befindlichen Fuge 20 (Fig.4) unter Klemmwirkung räumlich beweglich geführt. Die Fuge 20 bildet zangenartig gegenüber dem betreffenden Ende des Dichtungskörpers 13 umgebogenen Backenenden B1, B2 einen Schiebe- und Dichtsitz aus. Die Fuge 20 wird von die Backenenden B1,B2 enthaltenden, örtlich in gegenseitgem Abstand gehaltenen Wandabschnitten 21,22 ausgebildet, von denen der hier untere Wandabschnitt 22 zugleich als Federkörper oder -blech ausgebildet ist. In Abwandlung könnten auch beide Wandabschnitte 21,22 als Federkörper ausgebildet sein. Wie in Fig. 4 dargestellt, ist wenigstens ein Wandabschnitt 21 der Fuge 20 von einem örtlich abgewinkelten Teil des Abdeckkörpers 8 als dem hier "anderen Bauteil" ausgebildet. Pfeil F kennzeichnet dabei in Fig. 4 eine zu kompensierende relative Bewegungsrichtung des Abdeckkörpers 8 zum Gehäuse 4. Die Pfeilrichtungen Hz bzw. Vt kennzeichnen in Fig. 4 die relativen Freiheitsgrade der Abdichtung in horizontaler bzw. vertikaler Richtung. Von der in Fig. 1 schematisch angedeuteten Rohrmatrix 3' (dort teilweise abgebrochen gezeichnet) ist in Fig. 4 ein entsprechender Teil der Matrixbogenbereiches durch eine abgebrochen dargestellte Reihe von Profilrohren 5 nebst Abstandshalter 23 verdeutlicht. S verkörpert in Fig. 4 eine von mehreren Bürstendichtungen (s.h. auch Fig. 1).

In Fig. 4 und 5 ferner verdeutlicht, sind die Haken 17 Bestandteile eines sich in Spaltlängsrichtung erstreckenden Dicht- bzw. Haltebleches 24. Dieses Halteblech 24 kann ebenfalls in Einzelbleche mit gegenseitigen Abständen 25 zwischen benachbarten Stoßkanten thermisch kompatibel ausgebildet sein. An Stellen 26 kann das Halteblech z.B. durch Punktschweißung mit einem parallel dazu verlaufenden Blech 27 (Fig.4) verbunden sein; mit einem laschen- oder hakenartig gegen den Dichtungskörper 13 abgebogenen Endteil nimmt der so ausgebildete "Doppel-Laschen-Körper" eine elastisch verformbare Dichtung, z.B. hier als Dichtschnur 28 ausgebildet, auf. Die Schnur 28 wird also zwischen den jeweiligen Haken 17 und dem nach innen abgebogenen Teil des inneren Bleches 27 fest eingebunden. Die Dichtung oder Schnur 28 kann erfindungsgemäß aus einem keramischen Asbestgewebe gefertigt sein. Der so ausgebildete "Doppel-Laschen-Körper" nebst Dichtschnur 28 ist an mehreren in Spaltlängsrichtung aufeinander folgenden Punkten 29 (Fig. 5) mit zugehörigen VerSchraubungen-Mutter-Schraub-Verbindungen 30 (Fig.4)- hier mit einem thermisch isolierten Innenwandteil 31 des Gehäuses 4 verbunden. Mithin sitzt also das aufhängungsseitige Ende des Dichtungskörpers 13 (Fig.4) entlang einer in Spaltlängsrichtung aufeinander folgenden Schicht von Elementen 15 stets abdichtend an der Dichtschnur 28 auf, die in beschriebener Weise am Gehäuse 4 verankert ist.

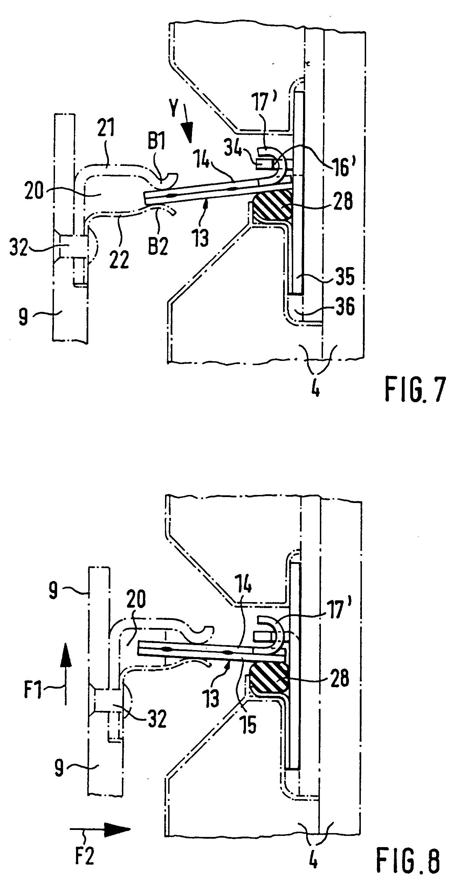

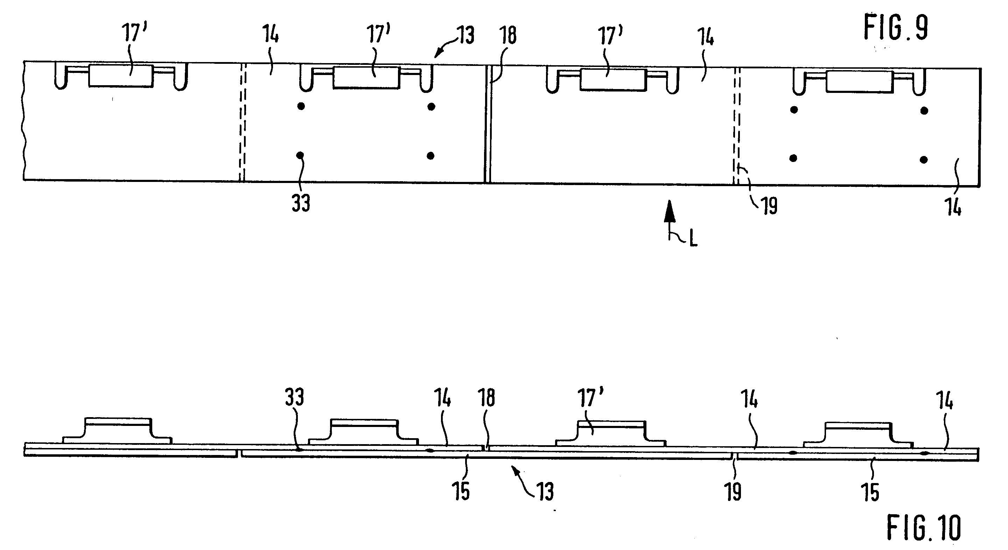

Unter Verwendung gleicher Bezugszeichen für gleiche oder im wesentlichen identische Bauteile verkörperten die Fig. 7 bis 10 eine Abwandlung der Einrichtung, die hier zwischen einer Leitwand 9 (s.h. auch Fig. 1) und einem mit Abstandsspalt D daran angrenzenden Gehäuse 4 ausgebildet ist. Dabei wird die Fuge 20 zwischen zwei Einzelwandabschnitten 21,22 ausgebildet, wobei wiederum der hier untere Wandabschnitt 22 als Federkörper die eingangs genannte dichte Umklammerung des einen Endes des Dichtungskörpers 13 ausbildet. Gemäß Fig. 7 und 8 verläuft hier die Fuge 20 ebenfalls in Spaltlängsrichtung und ist in dieser Richtung an mit Abstand aufeinander folgenden Punkten, z.B. durch Niete 32, mit der betreffenden Leitwand 9 verbunden.

Beim Ausführungsbeispiel nach Fig. 7 bis 10 sind ferner die jeweiligen Elemente 14 bzw. 15 - oder Bleche - des Dichtungskörpers 13 in Zonen, die außerhalb der gegenseitig überlappten oder überbrückten Abstandsspalte 18,19 liegen, an Stelle 33 örtlich gegenseitig, z.B. durch Punktschweißung, verbunden; dabei bilden also z.B. immer zwei punktuell miteinander verbundene Elemente 14,15 für sich und realtiv zu benachbarten so miteinander verbundenen zwei weiteren Elementen 14,15 relativ zueinander oder aber gemeinsam in Spaltlängsrichtung verschiebbare Platteneinheiten aus.

Im Beispiel nach Fig. 7 bis 10 ist es ferner vorgesehen, daß die Haken 17' zur einseitig bauteil-bezogenen Aufhängung am Gehäuse 4 von einseitig abgebogenen Endteilen der hier oberen Schicht in Spaltlängsrichtung aufeinander folgender Elemente 14 oder Bleche gebildet sind; die Haken 17' sind dabei in Schlitzen 16' von Laschen 34 aufgehängt, die seitlich abgebogene Bestandteile eines Haltebleches 35 sind; das Halteblech 35 erstreckt sich ebenfalls in Spaltlängsrichtung und ist mit dem Gehäuse 4 verbunden; dabei sitzt das Halteblech 35 fest verankert in einer Nische 36, die zwischen entsprechend ausgeformten inneren äußeren Wandstrukturen des Gehäuses 4 ausgebildet ist. Letzteres gilt sinngemäß für die Anordnung der sich in Spaltlängsrichtung erstreckenden Dichtung, hier wieder als Schnur 28 ausgebildet; diese sitzt in einer nach oben offenen Nut, die zwischen örtlich abgewinkelten inneren Strukturbauteilen des Gehäuses 4 und dem Halteblech 35 gehäuseseitig ortfest eingebunden ist.

Fig. 7 verdeutlicht die Einrichtung im kalten oder Ruhezustand; Fig. 7 hingegen verkörpert die Einrichtung nebst Bauteilpositionen im heißen Zustand; d.h., Lageveränderung der Leitwand 9 in Pfeilrichtung F 1 nach oben sowie Bewegung horizontal, in Richtung des Pfeils F2, auf das Gehäuse 4; die genannten Lageveränderungen werden gemäß Fig. 8 räumlich kompensiert in der Kombination aus Schwenkbarkeit und gleichzeitig horizontal tieferer Einschiebebewegung des Dichtungskörpers 13 in die Fuge 20.

## Patentansprüche

1. Einrichtung zur Abdichtung eines Spaltes zwischen mindestens zwei relativ zueinander beweglich angeordneten Bauteilen- oder gruppen, insbesondere eines Wärmetauschers, bei der ein mit dem ersten Bauteil (4) verbundener streifenförmiger Dichtungskörper (13)in einer Fuge (20) des zweiten Bauteils (8) abdichtend und beweglich geführt ist, dadurch gekennzeichnet, daß der Dichtungskörper (13) aus plattenförmigen Elementen (14,15) schichtartig zusammengesetzt ist, derart, daß die plattenförmigen Elemente (14,15) sich stets abdichtend überlappen, wobei diese plattenförmigen Elemente (14,15) in Spaltlängsrichtung verschiebbar und frei dehnbar angeordnet sind, am ersten Bauteil (4) schwenkbar aufgehängt sind und am zweiten Bauteil (8) über die Fuge (20) unter Klemmwirkung räumlich beweglich geführt sind.

2. Einrichtung nach Anspruch 1, dadurch gekennzeichnet, daß die plattenförmigen Elemente (14,15) des Dichtungskörpers (13) in mehreren Lagen, insbesondere doppellagig unter gegenseitig abdichtender Überbrückung von in Spaltlängsrichtung aufeinander folgenden Abstandsspalten angeordnet sind.

3. Einrichtung nach Anspruch 1 oder 2, dadurch gekennzeichnet, daß der Dichtungskörper (13) mit den plattenförmigen Elementen (14,15) an mehreren in Spaltlängsrichtung in einer Ebene aufeinander folgenden Stellen mittels Haken (17) an dem ersten Bauteil (4) quer zu dieser Ebene schwenkbar sowie in Spaltlängsrichtung verschiebbar aufgehängt sind.

4. Einrichtung nach Anspruch 3, dadurch gekennzeichnet, daß die Haken (17) Bestandteile eines sich in Spaltlängsrichtung erstreckenden, mit dem ersten Bauteil (4) verbundenen Haltebleches (24) sind, wobei der Dichtungskörper über Ösen, Durchbrüche, Längsschlitze (16) oder dergleichen an den Haken lose aufgehängt ist.

5. Einrichtung nach Anspruch 3, dadurch gekennzeichnet, daß die Haken (17') von einseitig abgebogenen Endteilen der in einer Schicht in Spaltlängsrichtung aufeinander folgenden Elemente (14) bzw. Blechplatten gebildet sind, und die Haken (17') an Durchbrüche, Längsschlitze oder dergleichen enthaltenden Laschen (34) aufgehängt sind, welche von seitlich abgebogenen Bestandteilen eines Haltebleches (35) gebildet sind, daß sich in Spaltlängsrichtung erstreckt und mit dem ersten Bauteil (4) verbunden ist.

6. Einrichtung nach einem oder mehreren der Ansprüche 1 bis 5, dadurch gekennzeichnet, daß das aufhängungsseitige Ende des Dichtungskörpers (13) entlang einer in Spaltängsrichtung aufeinander folgenden Schicht von Elementen (15) oder Blechplatten stets an einer elastisch verformbaren Dichtung, z.B. an einer Dichtschnur (28) aufsitzt, die am ersten Bauteil (4) verankert ist.

7. Einrichtung nach Anspruch 6, dadurch gekennzeichnet, daß die Dichtschnur (28) an einem mit dem ersten Bauteil (4) verschraubten Doppel-Laschenkörper fest verankert ist.

8. Einrichtung nach einem oder mehreren der Ansprüche 1 bis 7, dadurch gekennzeichnet, daß die Fuge (20) einen zangenbackenartigen Schiebe- und Dichtsitz für das betreffende eine Ende des Dichtungskörpers (13) ausbildet und zumindest einer von beiden die Fuge ausbildenden Wandabschnitten (22) ein Federkörper ist.

9. Einrichtung nach Anspruch 8, dadurch gekennzeichnet, daß ein die Fuge (20) ausbildender Wandabschnitt (21) von einem örtlich abgewinkelten Teil eines bzw. des zweiten Bauteils (8) ausgebildet ist.

10. Einrichtung nach Anspruch 8, dadurch gekennzeichnet, daß beide die Fuge (20) ausbildenden Wandabschnitte (21,22') an mehreren in Spaltlängsrichtung aufeinander folgenden Punkten mit dem zweiten Bauteil (8) dicht und fest verbunden sind.

11. Einrichtung nach einem oder mehreren der Ansprüche 1 bis 10, dadurch gekennzeichnet, daß in Spaltängsrichtung versetzt übereinander angeordnete Elemente (14,15) bzw. Blechplatten des Dichtungskörpers (13) eine örtlich fest miteinander verbundene Dichteinheit ausbilden, die relativ zu mindestens einer weiteren derartigen Einheit verschiebbar angeordnet ist.

12. Verwendung einer Einrichtung nach einem oder mehreren der Ansprüche 1 bis 11 für einen Wärmetauscher mit in Blöcke zergliederter Profilrohrmatrix (3;3'), worin die Matrix-Blöcke aus U-förmigen Rohren bestehen, die jeweils ein- und austrittsseitig an Sammel- bzw. Verteilerrohre (1,2) für Druckluftzu- und abfuhr angeschlossen sind und mit die Blöcke umrandenden Leitwänden (8,9), die mit Abstand zu einem Heißgas (H) führenden Gehäuse (4) angeordnet sind, dadurch gekennzeichnet, daß die Einrichtung als Heißgasabsperrdichtung von Spalten (C,D) zwischen mehreren räumlich verteilten Bauteilsektionen des Gehäuses und daran angrenzenden Bauteilsektionen der Leitwände angeordnet und ausgebildet ist.

13. Verwendung einer Einrichtung nach Anspruch 12, dadurch gekennzeichnet, daß das erste Bauteil das Gehäuse (4) des Wärmetauschers, das zweite Bauteil mindestens eine mit den Sammel- oder Verteilerrohren (1,2) verbundene Leitwand (9) ist.

## Claims

1. Device for sealing a gap between at least two components or subassemblies, in particular of a heat exchanger, which are arranged so that they can move relative to each other, in which device a lamellar sealing body (13) connected to the first component (4) is supported in a joint (20) of the second component (8) in a sealed and movable manner, characterised in that the sealing body (13) has a layered composition of plate-shaped elements (14, 15) such that the plate-shaped elements (14, 15) constantly overlap in a sealed manner, wherein these plate-shaped elements (14, 15) are arranged so that they can be displaced and freely extended in the longitudinal direction of the gap, are suspended for swivelling from the first component (4) and are supported for movement in three dimensions on the second component (8) by way of the joint (20) under a clamping effect.

2. Device according to claim 1, characterised in that the plate-shaped elements (14, 15) of the sealing body (13) are arranged in several layers, in particular in two layers, with mutually sealed bridging of successive spacer gaps in the longitudinal direction of the gap.

3. Device according to claim 1 or 2, characterised in that the sealing body (13) having the plate-shaped elements (14, 15) is suspended by means of hooks (17) from the first component (4) at several successive points in a plane in the longitudinal direction of the gap, so that it can be swivelled transversely relative to this plane and can be displaced in the longitudinal direction of the gap.

4. Device according to claim 3, characterised in that the hooks (17) are component parts of a sheet-metal holder (24) which extends in the longitudinal direction of the gap and is connected to the first component (4), wherein the sealing body is loosely suspended from the hooks by way of eyes, openings, longitudinal slots (16) or similar.

5. Device according to claim 3, characterised in that the hooks (17') are formed by end parts of the elements (14) or sheet-metal plates arranged successively in a layer in the longitudinal direction of the gap, which end parts are bent over on one side, and the hooks (17') are suspended from brackets (34) which contain openings, longitudinal slots or similar and which are formed by laterally bent-over component parts of a sheet-metal holder (35) which extends in the longitudinal direction of the gap and is connected to the first component (4).

6. Device according to one or more of claims 1 to 5, characterised in that the end of the sealing body (13) on the suspension side, along a successive layer of elements (15) or sheet-metal plates in the longitudinal direction of the gap, is constantly seated on an elastically deformable seal, for example on a gasket cord (28) which is anchored to the first component (4).

7. Device according to claim 6, characterised in that the gasket cord (28) is firmly anchored to a double bracket body screwed on to the first component (4).

8. Device according to one or more of claims 1 to 7, characterised in that the joint (20) forms a sliding and sealing seat in the shape of tong jaws for the relevant end of the sealing body (13), and at least one of two wall sections (22) forming the joint is a spring body.

9. Device according to claim 8, characterised in that one wall section (21) forming the joint (20) is formed by a locally angular part of the first or second component (8).

10. Device according to claim 8, characterised in that the two wall sections (21, 22') forming the joint (20) are firmly connected to the second component (8) in a sealed manner at several successive points in the longitudinal direction of the gap.

11. Device according to one or more of claims 1 to 10, characterised in that elements (14, 15) or sheet-metal plates of the sealing body (13) which are arranged one on top of another offset in the longitudinal direction of the gap form a sealing unit which is locally firmly connected together and which is arranged so that it can be displaced relative to at least one further such unit.

12. Use of a device according to one or more of claims 1 to 11 for a heat exchanger having a profiled tube matrix (3; 3') dissected into blocks, wherein the matrix blocks consist of U-shaped tubes which are respectively connected on the input and output side to respective collecting and distribution tubes (1, 2) for compressed air supply and removal, and having guiding walls (8, 9) bordering the blocks, which guiding walls are arranged at a distance from a housing (4) leading to a hot gas (H), characterised in that the device is arranged and formed as a hot gas barrier seal of gaps (C, D) between several spatially distributed component sections of the housing and component sections of the guiding walls, the latter being adjacent to the said component sections of the housing.

13. Use of a device according to claim 12, characterised in that the first component is the housing (4) of the heat exchanger, and the second component is at least one guiding wall (9) connected to the collecting or distributing tubes (1, 2).

## Revendications

1. Dispositif d'étanchéification d'une fente entre au moins deux pièces ou groupe de pièces mobiles l'une par rapport à l'autre, notamment d'un échangeur de chaleur, selon lequel un élément d'étanchéité (13) en forme de bande, relié à la première pièce 14, est guidé de manière étanche et mobile dans un intervalle (20) de la seconde pièce (8), dispositif caractérisé en ce que l'élément d'étanchéité (13) est composé d'éléments (14,15) en forme de plaques en couches, de façon que les éléments en forme de plaques (14, 15) se chevauchent toujours de manière étanche, et ces éléments (14, 15) en forme de plaques sont logés de façon coulissante et libre en dilatation dans la direction longitudinale de la fente, en étant suspendus de manière pivotante à la première pièce (4), et guidés de manière mobile sur la seconde pièce (8) par l'intervalle (20), avec un effet de pincement.

2. Dispositif selon la revendication 1, caractérisé en ce que les éléments en forme de plaques (14, 15) de l'élément d'étanchéité (13) sont prévus en plusieurs couches, notamment en une double couche et avec un chevauchement d'étanchéité réciproque pour les intervalles d'écartement qui se suivent dans la direction longitudinale de la fente.

3. Dispositif selon la revendication 1 ou 2, caractérisé en ce que l'élément d'étanchéité (13) et les éléments en forme de plaques (14, 15) sont suspendus dans la direction longitudinale de la fente en plusieurs endroits qui se suivent dans un plan, à l'aide de crochets (17), sur la première pièce (4), en pivotant transversalement à ce plan et en pouvant coulisser dans la direction longitudinale de la fente.

4. Dispositif selon la revendication 3, caractérisé en ce que les crochets (17) font partie d'une tôle de fixation (24) s'étendant dans la direction longitudinale de la fente et reliée à la première pièce (4), l'élément d'étanchéité étant suspendu librement aux crochets par des oeillets, des passages ou des fentes longitudinales (16) ou moyens analogues.

5. Dispositif selon la revendication 3, caractérisé en ce que les crochets (17') sont formés par les extrémités recourbées d'un côté des éléments ou plaques de tôle (14) qui se suivent en une couche dans la direction longitudinale de la fente, et les crochets (17') sont accrochés dans des passages, des fentes longitudinales ou des moyens analogues de pattes (34) formées par les pièces recourbées latéralement d'une tôle de fixation (35), de façon à s'étendre dans la direction longitudinale de la fente et à être reliées à la première pièce (4).

6. Dispositif selon l'une ou plusieurs des revendications 1 à 5, caractérisé en ce que l'extrémité du côté de la suspension de l'élément d'étanchéité (13) repose le long d'une couche successive d'éléments (15) ou de plaques de tôle qui se suivent dans la direction longitudinale de la fente, toujours sur un joint déformable élastiquement, par exemple sur un cordon d'étanchéité (28) accroché à la première pièce (4).

7. Dispositif selon la revendication 6 caractérisé en ce que le cordon d'étanchéité (28) est accroché solidairement à une pièce en forme de double patte vissée sur la première pièce (4).

8. Dispositif selon l'une ou plusieurs des revendications 1 à 7, caractérisé en ce que l'intervalle (20) forme un siège de coulissement et d'étanchéité en pince pour l'extrémité correspondante de l'élément d'étanchéité (13) et au moins l'un des deux segments de paroi (22) qui forment l'intervalle est un élément élastique.

9. Dispositif selon la revendication 8, caractérisé en ce qu'un segment de paroi (21) qui forme l'intervalle (20), est réalisé comme une partie recourbée localement de la première ou de la seconde pièce (8).

10. Dispositif selon la revendication 8, caractérisé en ce que les deux segments de paroi (21, 22') qui forment l'intervalle (20), sont reliés solidairement et de façon étanche à la seconde pièce (8) en plusieurs points qui se suivent dans la direction longitudinale de la fente.

11. Dispositif selon l'une ou plusieurs des revendications 1 à 10, caractérisé en ce que des éléments (14, 15) ou plaques de tôle de l'élément d'étanchéité (13) qui sont superposés de manière décalée dans la direction longitudinale de la fente, réalisent un élément d'étanchéité relié solidairement, de façon locale, et qui est coulissant de manière relative au moins par rapport à un autre tel élément.

12. Application d'un dispositif selon l'une ou plusieurs des revendications 1 à 11, à un échangeur de chaleur comportant une matrice de tubes profilés (3, 3') composée de blocs formés de tubes en U reliés respectivement par leur entrée et par leur sortie à des tubes collecteurs et distributeurs (1, 2) pour l'alimentation et l'évacuation d'air comprimé, et les parois de guidage (8, 9) entourant les blocs en étant à une distance du boîtier (4) pour guider les gaz chauds (H), caractérisée en ce que le dispositif est monté et disposé comme joint d'arrêt de gaz chauds dans des fentes (C, D) entre plusieurs sections de pièces réparties dans l'espace et appartenant au boîtier et aux sections de pièces adjacentes des parois de guidage.

13. Application d'un dispositif selon la revendication 12, caractérisée en ce que la première pièce est le boîtier (4) de l'échangeur de chaleur, et la seconde pièce est au moins une paroi de guidage (9) reliée aux tubes collecteurs et distributeurs (1,2).
